(19) Europäisches Patentamt
European Patent Office
Office européen des brevets

(11) **EP 3 499 209 B1**

(12) **EUROPÄISCHE PATENTSCHRIFT**

(45) Veröffentlichungstag und Bekanntmachung des Hinweises auf die Patenterteilung:
**09.09.2020   Patentblatt 2020/37**

(51) Int Cl.:
***G01M 11/02*** *(2006.01)*

(21) Anmeldenummer: **19155525.9**

(22) Anmeldetag: **30.04.2014**

(54) **VERFAHREN UND VORRICHTUNG FÜR DIE BRILLENGLAS-QUALITÄTSKONTROLLE**

METHOD AND DEVICE FOR QUALITY CONTROL OF GLASS FOR SPECTACLES

PROCÉDÉ ET DISPOSITIF DESTINÉS AU CONTRÔLE QUALITÉ DE VERRE DE LUNETTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.05.2013   DE 102013208090**

(43) Veröffentlichungstag der Anmeldung:
**19.06.2019   Patentblatt 2019/25**

(62) Dokumentnummer(n) der früheren Anmeldung(en) nach Art. 76 EPÜ:
**14166630.5 / 2 799 832**

(73) Patentinhaber: **Carl Zeiss Vision International GmbH**
**73430 Aalen (DE)**

(72) Erfinder: **HANßEN, Adalbert**
**73434 Aalen (DE)**

(74) Vertreter: **Gauss, Nikolai et al**
**Pfiz/Gauss Patentanwälte PartmbB**
**Tübingerstraße 26**
**70178 Stuttgart (DE)**

(56) Entgegenhaltungen:
**EP-A1- 0 395 831     EP-A1- 1 291 634**
**EP-A1- 2 189 776     DE-B3-102007 061 375**
**US-B1- 6 222 621**

**Beschreibung**

Die Erfindung betrifft ein Verfahren nach dem Oberbegriff des Anspruchs 1 und eine Vorrichtung für die Qualitätskontrolle eines Brillenglases nach dem Oberbegriff des Anspruchs 12.

Eine derartige Vorrichtung und ein derartiges Verfahren ist aus der DE 10 2007 061 375 B3 bekannt. Um die Qualität von Brillengläsern zu bestimmen, ist dort vorgeschlagen, eine Vielzahl von Messwerten zu erfassen, die dann analysiert und mit Sollwerten, insbesondere Sollwerten für die Flächenwirkungen des Brillenglases verglichen werden.

Um die Qualität von Brillengläsern in Fertigungsprozessen zu überwachen, ist es außerdem bekannt, die optische Wirkung eines Mehrstärken- oder Gleitsichtbrillenglases oder seine Krümmung an einzelnen ausgewählten Bezugspunkten wie z. B. dem Nah- und dem Fernbezugspunkt zu vermessen und die entsprechenden Messwerte mit einem Sollwert zu vergleichen. Mit diesen Maßnahmen lässt sich ermitteln, ob ein Brillenglas z. B. der Norm EN ISO 8980-2:2004 Punkt 5.2.2.2 genügt. Für Abweichungen an anderen Stellen des Brillenglases als den Bezugspunkten treffen die Normen keine Aussagen. Aus dem Umstand, dass ein Messwert, der bei einem Brillenglas an einem einzelnen Bezugspunkt aufgenommen ist, nicht oder nur wenig von einem Sollwert abweicht, kann nicht zwingend geschlossen werden, dass dieses Brillenglas frei von Fertigungsfehlern ist.

In der EP 2 189 776 A1 ist ein Verfahren zur Beurteilung der Qualität von Brillengläsern beschrieben. Das Verfahren unterscheidet zwischen regulären Abweichungen, die konstant sind oder sich langsam ändern, und irregulären Abweichungen, die auf einer lokal starken Änderung beruhen. Ziel des Verfahrens ist es, die irregulären Abweichungen zu erkennen, indem ein Qualitätsmaß auf Basis der durchschnittlichen maximalen Ableitung der Abweichungen definiert wird.

Aufgabe der Erfindung ist es, ein Verfahren für die Qualitätskontrolle von Brillengläsern bereitzustellen, das ein zuverlässiges Erkennen von unterschiedlichen fehlerhaften Eigenschaften von Brillengläsern ermöglicht, deren Ursache insbesondere Fertigungsfehler sind, und eine Vorrichtung für die Qualitätskontrolle eines Brillenglases zu schaffen, mit der sich zuverlässig erkennen lässt, ob ein Brillenglas fehlerhaft ist.

Diese Aufgabe wird durch ein Verfahren für die Qualitätskontrolle eines Brillenglases mit den Merkmalen des Anspruchs 1 und eine Vorrichtung für die Qualitätskontrolle eines Brillenglases mit den Merkmalen des Anspruchs 12 gelöst.

Vorteilhafte Ausführungsformen der Erfindung sind in den abhängigen Ansprüchen angegeben.

Bei einem erfindungsgemäßen Verfahren wird zunächst die Topografie von wenigstens einer optisch wirksamen Fläche des Brillenglases ermittelt wird, dann lokale Istwerte I[X,Y] von wenigstens einer optischen Größe des Brillenglases unter Berücksichtigung der ermittelten Topografie berechnet werden, im Anschluss daran lokale Abweichungen F[X,Y] der berechneten lokalen Istwerte I[X,Y] von lokalen Sollwerten S[X,Y] für die wenigstens eine optische Größe des Brillenglases berechnet werden, dann ein Qualitätsmaß Q für das Brillenglas ermittelt wird, indem die berechneten lokalen Abweichungen F[X,Y] ausgewertet werden, und dann das ermittelte Qualitätsmaß Q nach einer Qualitätsvorschrift bewertet wird.

Die Erfindung beruht auf dem Gedanken, dass ein Brillenglas in einem Koordinatensystem beschrieben werden kann, dessen Z-Richtung in der sogenannten "Nullblickrichtung" beim bestimmungsgemäßen Gebrauch von dem Auge des Betrachters weg weist, dessen Y-Richtung senkrecht verläuft und dessen X-Richtung senkrecht zu den beiden anderen Koordinatenachsen ist. Obwohl ein Brillenglas ein dreidimensionaler Gegenstand ist, spricht man hier jedoch häufig vereinfachend von einem Punkt {X,Y} und meint dessen Projektion auf die XY-Ebene des vorstehend definierten Koordinatensystems. Vor dem Auge des Benutzers entspricht jeder Punkt {X,Y} einer Blickrichtung und umgekehrt.

Für jeden Punkt {X,Y} auf einem Brillenglas und für jede dort mögliche Einfallsrichtung eines Lichtbündels kann man lokale optische Größen ausrechnen.

Die wichtigsten lokalen optischen Größen in der Brillenoptik sind in der nachfolgenden Tabelle aufgeführt:

| Nr. | Optische Größe | Einheit |
|---|---|---|
| 1. | Sphäre (sph) | Dioptrie (dpt) [1/m] |
| 2. | Astigmatismus (cyl)<br>Bemerkung:<br>Zum Astigmatismus ($\neq 0$) gehört immer noch eine<br>Achsrichtung<br>(ax)<br>Angabe z. B. im TaBo-Schema | Dioptrie (dpt) [1/m] |
| 3. | Strahlablenkung ($pr_{hor}$, prvert) | Prismendioptrie [cm/m] |

(fortgesetzt)

| Nr. | Optische Größe | Einheit |
|---|---|---|
| 4. | Kennzahlen (K)<br>über die Intensitätsverteilung bei Durchrechnung von Bündeln über eine ausgedehnte Pupille, z. B. bei Durchrechnung über Bündel mit 5 mm Durchmesser (z. B. zwei Zahlen) | |
| 5. | Gesamtvergrößerung (V)<br>des Systems Auge+Brillenglas für die durch den Punkt {X,Y} definierte (z. B.: eine Zahl, bei einem Hornhaut-Scheitelabstand von ca 15 mm und einem Rezeptwerten zwischen -20 Dpt und 20 Dpt liegt diese Zahl z. B. in der Größenordnung 0,7 ... 1,7) | |

Die optischen Größen Nr. 1, Nr. 2 und manchmal auch Nr. 3 nennt man üblicherweise die dioptrischen Größen. Als lokale optische Größen hängen die optischen Größen bei einem Brillenglas in der Regel von der Blickrichtung ab.

Eine lokale optische Größe kann vorliegend auch eine Transformation einer bestimmten lokalen optischen Größe sein, z. B. der Logarithmus etc.

Als eine lokale optische Größe eines Brillenglases wird vorliegend auch ein n-Tupel aus optischen Größen als Komponenten bezeichnet, etwa den optischen Größen der Tabelle, z. B. das 2-Tupel (sph, cyl) oder das 3-Tupel (sph, cyl, ax).

Unter dem Sollwert für eine optische Größe des Brillenglases wird vorliegend ein z. B. aufgrund eines Brillenglasdesigns herstellerseitig vorgegebener Wert für die betreffende optische Größe verstanden.

Der Istwert für eine solche optische Größe bezeichnet vorliegend einen tatsächlichen Wert der optischen Größe bei einem bestimmten Brillenglas.

Nach der Erfindung wird dieser Istwert unter Berücksichtigung einer für eine optische wirksame Fläche des Brillenglases ermittelten Topografie berechnet. Die für eine solche Berechnung zusätzlich erforderliche Information zu der Topografie der Gegenfläche und zu dem Brechungsindex des Glasmaterials, aus dem das Brillenglas besteht, ist dabei entweder bekannt oder sie wird aufgrund einer entsprechenden Messung bestimmt.

Mit der Information der Topographie beider optisch wirksamen Flächen und der Information über den Brechungsindex des Glasmaterials kann man bei einem Brillenglas auch die Scheitelbrechwerte im Scheitelbrechwertmesserstrahlengang in den Bezugspunkten ausrechnen, um sie mit den zugehörigen Sollwerten aus einer Durchrechnung des Designs im Scheitelbrechwertmesserstrahlengang zu vergleichen. Nach Norm dürfen Brillengläser in den Bezugspunkten nicht mehr abweichen als dort abhängig von der Wirkung des Brillenglases festgelegt ist.

Zu bemerken ist, dass das erfindungsgemäß ermittelte Qualitätsmaß Q insbesondere eine zusätzliche Beurteilung der Wirkungen ermöglicht, die sich in einer normgerechten Messung an den Bezugspunkten ergeben. D. h., das erfindungsgemäße Verfahren kann sogar eine normgerechte Messung an den Bezugspunkten abdecken. Von Vorteil ist bei dem erfindungsgemäßen Verfahren, dass hierfür auch eine Berechnung durch die auf einer Messung beruhenden Topografiebeschreibung und dem bekannten Brechungsindex beruht, die in einem normgerechten Scheitelbrechwertmesserstrahlengang durchgeführt wird. Hierdurch wird eine zusätzliche Messung mit der dafür erforderlichen Ausrichtung des Brillenglases unter einem Scheitelbrechwertmesser entbehrlich, sodass die Gefahr von Beschädigungen des Brillenglases bei dieser Messung vermieden wird.

Das erfindungsgemäß ermittelte Qualitätsmaß Q kann auch dem Umstand Rechnung tragen, dass der Einfluss einer Abweichung auf den Seheindruck des Brillenträgers von der Blickrichtung abhängt: Für Blickrichtungen, an denen z. B. die unvermeidlichen Restfehler größer sind, stört auch eine kleine Abweichung weniger als für die Blickrichtungen, an denen Restfehler klein sind. Ein Brillenträger vermeidet nämlich die Punkte auf dem Glas mit den größeren Restfehlern durch entsprechende Kopfbewegungen, so dass der Blick meistens durch Punkte mit kleinen Restfehlern fällt.

Da der Zusammenhang lokaler optischer Größen richtungsabhängig ist, muss man diese jeweils identifizieren. Bevorzugt erfolgt dies für die beiden folgenden Konstellationen:

a) die Gebrauchssituation: das ist die, bei der das Brillenglas in Bezug auf das bewegliche Auge so davor angeordnet ist, wie es nach der Bestimmung des Brillenglases sein soll;
b) die Stellung im Scheitelbrechwertmesserstrahlengang: je nach Art des betrachteten Scheitelbrechwertmessers (IOA oder FOA) hat man dabei auf der jeweils nach Norm vorgeschriebenen Seite senkrechte Inzidenz.

Eine erfindungsgemäße Vorrichtung für die Qualitätskontrolle eines Brillenglases enthält ein System für das Ermitteln der Topografie von wenigstens einer optisch wirksamen Fläche des Brillenglases und weist eine Rechnereinheit für das Berechnen von lokalen Istwerten I[X,Y] wenigstens einer optischen Größe des Brillenglases unter Berücksichtigung der ermittelten Topografie für das Berechnen von lokalen Abweichungen F[X,Y] der berechneten lokalen Istwerte I[X,Y] von lokalen Sollwerten S[X,Y] für die optische Größe des Brillenglases, für das Berechnen von einem Qualitätsmaß Q für das Brillenglas und für das Bewerten von dem ermittelten Qualitätsmaß Q nach einer Qualitätsvorschrift auf.

Die wenigstens eine optische Größe, zu der die lokalen Istwerte und deren Abweichung von lokalen Sollwerten berechnet werden, kann erfindungsgemäß insbesondere die optische Wirkung des Brillenglases bei einer bestimmungsgemäßen Anordnung und Ausrichtung vor dem Auge eines Betrachters sein. Eine solche lokale optische Größe kann aber alternativ oder zusätzlich auch die optische Wirkung des Brillenglases bei einer bestimmungsgemäßen Anordnung und Ausrichtung eines Brillenglaspaares vor den beiden Augen des Brillenglasträgers sein. Bei einer solchen lokalen optischen Größe kann es sich auch um die optische Wirkung des Brillenglases in einem Scheitelbrechwertmesserstrahlengang handeln. Darüber hinaus kann die wenigstens eine optische Größe auch die auf eine vorgegebene Lichteinfallsrichtung bezogene dioptrische Wirkung des Brillenglases oder die Strahlablenkung sein. Insbesondere kann die wenigstens eine optische Größe auch eine Größe aus der Gruppe sphärische Wirkung und/oder astigmatische Wirkung und/oder Achslage sein.

Um die Topografie der wenigstens einen optisch wirksamen Fläche zu ermitteln, wird die betreffende Fläche erfindungsgemäß mit einem Tastkopf einer Koordinatenmessmaschine abgetastet oder es wird die Wellenfront von Licht analysiert, das die Fläche durchsetzt oder das an der Fläche reflektiert wird. Für das Ermitteln der Topografie kann die Fläche erfindungsgemäß stattdessen auch mit Deflektometrie vermessen werden, insbesondere durch Reflexion von Mustern, z. B. Reflektion von Punktmustern und/oder von Streifenmustern. Nach der Erfindung kann darüber hinaus die Fläche insbesondere auch mit Stitching-Interferometrie, Weißlicht-Interferometrie oder Ultraschall-Interferometrie mit einem Hartmannsensor und/oder einem Shack-Hartmannsensor vermessen werden.

Zu bemerken ist, dass einige der vorgenannten Verfahren für das Ermitteln der Topgrafie einer optisch wirksamen Fläche zwar nicht primäre Messdaten über die Topographie ermitteln. Der Erfinder hat jedoch erkannt, dass die vorgenannten Verfahren grundsätzlich die erforderliche Information bereitstellen, um eine Topografie einer optisch wirksamen Fläche unter Berücksichtigung der übrigen bekannten Bestimmungsstücke aus den betreffenden primären Messdaten zu berechnen.

Mit den vorgenannten Verfahren lassen sich nämlich in einer Auswertung insbesondere die Topografiedaten X, Y und Z für eine optisch wirksame Fläche unter Zugrundelegen bekannter Topografiedaten der anderen, z. B. sphärischen oder torischen oder extra gemessenen Gegenfläche rekonstrurende.

Die mit einem der vorgenannten Verfahren gewonnenen Topografiedaten können z. B. Verteilungen der Flächennormalen, eine Punktewolke oder daraus hergeleitete Verteilungsfunktionen dieser Größen sein, z. B. interpolierende oder approximierende Funktionen über der Fläche, insbesondere Verteilungsfunktionen, die von X und Y abhängig sind. Die Topografiedaten können aber auch nur Punkte und lokale Funktionskeime sein, die den Verlauf der Topografie in der Umgebung von Punkten hinreichend gut für optische Durchrechnungen darstellen. Für den Fall von Funktionskeimen ist zu beachten, dass diese die Topografie einer Fläche nur in einer kleinen Umgebung eines betrachteten Punktes hinreichend gut darstellen. Dann darf man sie bei den Rechnungen auch nur in ihren jeweiligen Anwendbarkeitsbereichen für die lokalen Durchrechnungen verwenden.

Der Erfinder hat insbesondere erkannt, dass mit den vorgenannten Messverfahren flächenhafte Verteilungen der Oberflächenkrümmungen oder ähnliche Daten von Brillengläsern ermittelt werden können, oft schon direkt aus den unmittelbar erfassten primären Messdaten, die sich z. B. aus Strahlablenkwinkeln herleiten lassen, oder im Fall der Interferometrie durch Differenzierung der unmittelbar erfassten primären Daten modulo $2\pi$. Der Erfinder hat nämlich hier insbesondere erkannt, dass für solche lokalen Auswertungen dort kein Phase Unwrapping erforderlich ist, wie das z. B. in Bernd Dörband et. al., Handbook of Optical Systems, Wiley-VCH, Berlin (2012) detailliert beschrieben ist.

Zu bemerken ist, dass in besonderen Konstellationen, z. B. bei senkrechter Inzidenz diese Daten mit den Hauptkrümmungsdaten zusammenfallen. Die flächenhaften Plots zeigen ähnliche Verläufe wie bekannte Plots der sphärischen Wirkung oder des Astigmatismus. Deshalb werden sie von den Benutzern entsprechender Geräte als Wirkungsoder Astigmatismusplots angesehen oder bezeichnet, obwohl die Abweichung von der speziellen Konstellation, z. B. senkrechte Inzidenz, die Bezeichnung als Hauptkrümmungsdaten das eigentlich nicht rechtfertigt.

Bei einem Vermessen der optisch wirksamen Fläche mit einem Hartmannsensor in Durchlicht, bei dem man ebenfalls die Topographie der anderen Brillenglasfläche, die Mittendicke und den Brechungsindex kennen muss, sind die Messdaten auch geeignet, die klassische Messung mit einem Scheitelbrechwertmesser an den Bezugspunkten zu ersetzen und zugleich flächenhafte Aussagen über ein Gleitsichtglas zu gewinnen. Zwischen dem Strahlengang im Hartmannsensor und dem ScheitelbrechwertmesserStrahlengang bestehen nämlich nur mäßige Winkelunterschiede und die kann man rechnerisch in der Strahldurchrechnung im Scheitelbrecherstrahlengang kompensieren. In diesem Fall liefert also eine flächenhafte optische Messung nach der Auswertung beides: optische Daten über das Brillenglas in Gebrauchssituation und über das gleiche Brillenglas an seinen Bezugspunkten in der Stellung, in der dort auch ein normgerechter Scheitelbrechwertmesser messen würde.

Auch bei Daten aus einem Hartmann-Sensor kann man die Topographie des Brillenglases durch Funktionskeime oder durch eine globale Funktion rekonstruieren, beide wären mit einem großen Parametervektor beschrieben, von dem im Fall einer Funktionskeimbeschreibung einzelne Abschnitte die Parametern der einzelnen Funktionskeime enthalten.

Der Brillenglas-Hersteller kann die Sollwerte für die optischen Größen eines Brillenglases, die dessen optische Wirkung beschreiben, an jedem Punkt in jedem denkbaren Strahlengang grundsätzlich genau berechnen. Die Solldaten für Sphäre (sph), Astigmatismus (cyl) und Strahlablenkung ($p_{rhor}$, $p_{rvert}$) gelten dabei nur für die der Rechnung zugrunde liegende Einfallsrichtung im jeweils betrachteten Punkt. Für eine andere Einfallsrichtung sind sie geringfügig unterschiedlich.

Die Richtung des Lichts bei einem Scheitelbrechwertmesser ist ein Sonderfall. Scheitelbrechwertmesser zeigen deshalb auch nicht genau die optischen Wirkungen, die der Brillenträger bei bestimmungsgemäßer Anordnung und Ausrichtung des Glases vor dem Auge verspüren würde. Einem Weiterverarbeiter oder Benutzer eines Brillenglases ist weder die Soll-Topografie des Glases noch der Soll-Verlauf für dessen optische Größen bekannt. Ohne diese Daten ist es jedoch nicht möglich, Differenzen zwischen gemessenen Phänomenen und einer theoretischen Durchrechnung anzuzeigen.

Eine Idee der Erfindung besteht darin, die optische Wirkung der ermittelten Topografie, ausgedrückt durch Istwerte für optische Größen des Brillenglases in der Gebrauchsstellung zu berechnen und mit entsprechenden Sollwerten für die Gebrauchsstellung zu vergleichen.

Die Sollwerte von optischen Größen eines Brillenglases in einer Gebrauchsstellung hängen insbesondere von den Rezeptdaten ab, also von Rezept-Sphäre (sph), Rezept-Zylinder (cyl) und Rezept-Achslage (ax), von der Progressionslänge und Addition bei Gleitsichtgläsern, von dem Augen- bzw. Pupillenabstand und dem Hornhaut-Scheitelabstand, von der Grundkurve, von der Form der Brillenfassung allgemein, insbesondere von deren Größe, von der Vorneigung und von den Fassungsscheibenwinkeln.

Lokale optische Istwerte können sowohl für einen klassischen Scheitelbrechwertmesser-Strahlengang als auch in der vorgesehenen Ausrichtung des Brillenglases vor dem Auge des Benutzers berechnet und mit entsprechenden Sollwerten aus einer Durchrechnung des zugehörigen Designs verglichen werden. Eine Idee der Erfindung besteht insbesondere darin, die wenigstens eine optische Größe mittels einer Strahldurchrechnung zu berechnen.

Nach der Erfindung werden dazu für ein Brillenglas im Grundsatz aus einem hinreichend dichten Raster zu jedem Punkt $\{X_p, Y_p\}$, der in der Gebrauchssituation einer Blickrichtung entspricht, in einer Strahldurchrechnung die optischen Wirkungen berechnet, insbesondere die Strahlablenkung bzw. die prismatische Wirkung ($p_v$, $p_h$), die sphärische Wirkung (sph), die astigmatische Wirkung (cyl, ax), alternativ oder zusätzlich auch Kennzahlen betreffend die Intensitätsverteilung bei der Durchrechnung von Bündeln über eine ausgedehnte Pupille, z. B. bei der Durchrechnung über Bündel mit 5 mm Durchmesser. Darüber hinaus werden optional auch die Gesamtvergrößerung des Systems Auge und Brillenglas in einer dem bestimmungsgemäßen Gebrauch entsprechenden Benutzungssituation beider Augen und gegebenenfalls auch noch weitere Größen berechnet. Dann ist es z. B. möglich, zu dioptrischen Daten {sph, cyl, ax} eine punktweise Abweichung zwischen Soll- und Istwerten zu berechnen, etwa mit der Technik der Astigmatismusüberlagerung .

Die Technik der Astigmatismusüberlagerung ergibt die optische Wirkung, die zwei dünnen Linsen entspricht, die unendlich dicht beieinander sind. Wenn man mit Astigmatismusüberlagerung zwei optische Wirkungen vergleicht, versieht man die optischen Größen $sph_2$ und $cyl_2$ mit einem umgekehrten Vorzeichen und behält es bei $ax_2$ bei. Nachfolgend wird die Rechenvorschrift für die Astigmatismusüberlagerung explizit angegeben:

$sph_1$, $cyl_1$, $ax_1$ sphärische, zylindrische Wirkung und Achse (in Grad) des Designs (alle drei Größen Funktionen von X und Y)

$sph_2$, $cyl_2$, $ax_2$ sphärische, zylindrische Wirkung und Achse (in Grad) aus der Durchrechnung des gemessenen Glases (alle drei Größen Funktionen von X und Y)

$$cyl \; := \; \sqrt{cyl_1^2 + cyl_2^2 + 2 \cdot cyl_1 \cdot cyl_2 \cdot \cos\left(2 \cdot (ax_2 - ax_1)\right)} \qquad (1)$$

$$sph \; := \; sph_1 + sph_2 + \frac{cyl_1 + cyl_2 - cyl}{2} \qquad (2)$$

$$\Delta ax \quad := \quad \frac{1}{2} \cdot \arcsin\left(\frac{cyl_2}{cyl} \cdot \sin\left(2 \cdot (ax_2 - ax_1)\right)\right)$$

$$ax \quad := \quad \begin{cases} ax_1 + \Delta ax & \text{falls } cyl_1 + cyl_2 \cdot \cos\left(2 \cdot (ax_2 - ax_1)\right) \geq 0 \\ ax_1 - \Delta ax + 90° & \text{falls } cyl_1 + cyl_2 \cdot \cos\left(2 \cdot (ax_2 - ax_1)\right) < 0 \end{cases} \qquad (3)$$

Die Astigmatismusüberlagerung liefert drei Zahlenwerte für Zylinder (cyl), Sphäre (sph) und Achslage (ax), wobei es bei der Beurteilung der vom Brillenträger wahrgenommenen Sehschärfe, vor allem auf die resultierenden Abweichungen von Sphäre (sph) und Zylinder (cyl) ankommt. Die Achslage der resultierenden Zylinderwirkung (ax) hat auf den Seheindruck eine geringere Auswirkung.

Bei prismatischen Abweichungen dagegen kann man einfach die Vektordifferenz über die durch den Punkt berechnete Ausfallrichtung des Strahls bilden. Relevant davon ist hauptsächlich deren vertikale Komponente, denn diese verursacht Brillenträger-Unverträglichkeit.

Zu bemerken ist, dass beim optischen Design von Brillengläsern angestrebt wird, dass unvermeidliche Abbildungsfehler begrenzt werden und allenfalls in peripheren Bereichen auftreten, die der Benutzer dann vermeidet.

Die optische Größe Gesamtvergrößerung bei einem Brillenglas ist ein Faktor. Bei einem Hornhaut-Scheitelabstand von ca. 15 mm und bei Rezeptwerten zwischen -20 dpt und 20 dpt liegt dieser in der Größenordnung 0,7 ... 1,7. Er hängt im Allgemeinen von der Blickrichtung ab.

Die Gesamtvergrößerungsfaktoren beider Augen dürfen für angenehmes beidäugiges Sehen nicht zu stark voneinander abweichen und für verschiedene Blickrichtungen auch nicht zu schnell variieren. Das Maß der Abweichungen zwischen dem rechten und dem linken Auge und die Änderung des lokalen Gesamtvergrößerungsfaktors für verschiedene Blickrichtungen beeinträchtigen den Sehkomfort. Auch diese Größe kann erfindungsgemäß bei dem Ermitteln von einem Qualitätsmaß Q für ein Brillenglas berücksichtigt werden.

Im Rahmen der Erfindung wird eine Strahldurchrechnung für das Brillenglas auf einer ausreichend dichten Punktemenge {{X_1, Y_1}, {X_2, Y_2}, {X_3, Y_3}, ... , {X_n, Y_n}} ausgeführt, z. B. auf einem regelmäßigen Raster und in der vorgesehenen Position und Ausrichtung des durchzurechnenden Brillenglases vor dem Auge. Hier werden dann für die durch diese Punkte bestimmten Blickrichtungen die optischen Abweichungen berechnet.

Eine Idee der Erfindung ist es nun, das Qualitätsmaß Q aus einem Mittelwert M der berechneten lokalen Abweichungen F[X,Y] der wenigstens einen optische Größe an über das Brillengas in einem Raster verteilten Punkten P[X,Y] zu berechnen.

Eine weitere Idee der Erfindung ist es dabei insbesondere, dass der entsprechende Mittelwert ein mit einer Gewichtsverteilung G[X,Y] gewichteter Mittelwert der berechneten lokalen Abweichungen der optischen Größe F[X,Y] ist.

Nach der Erfindung wird also ein Qualitätsmaß für das Brillenglas ermittelt, das die Abweichungen F[X,Y] der berechneten lokale Istwerte I[X,Y] von lokalen Sollwerten S[X,Y] für die optischen Größen des Brillenglases für mehrere oder viele Punkte P[X,Y] auf dem Brillenglas zu einem Wert verdichtet.

Das Gewichten der lokalen Abweichungen F[X,Y] des Istwerts I[X,Y] der wenigstens einen optischen Größe von dem dazugehörenden Sollwert S[X,Y] mit einer Gewichtsverteilung G[X,Y] ist eine bestimmte Rechenvorschrift, die die optischen Größen mit Faktoren multipliziert, die alle das gleiche Vorzeichen haben oder Null sind.

Dabei wird die Gewichtsverteilung (G[f[X,Y]]) für das Gewichten der lokalen Abweichung (F[X,Y]) als eine Funktion gewählt, die den Wert Null annimmt, wenn die berechnete lokale Abweichung (F[X,Y]) einen vorgegebenen Wert (W) unterschreitet.

Erfindungsgemäß können die Gewichtsverteilungen G[X,Y] ortsabhängig und/oder von vorgegebenen, berechneten oder gemessenen Eigenschaften des Brillenglases abhängig sein. Erfindungsgemäß können die Gewichtsverteilungen insbesondere stetig sein, sie müssen es aber nicht.

Eine Eigenschaftsabhängigkeit einer Gewichtsverteilung G[X,Y] kann z. B. gegeben sein, wenn diese in Wirklichkeit einem funktionalen Zusammenhang G[f[X,Y]] mit einer Eigenschaftsfunktion f[X,Y] folgt. Eine solche Eigenschaftsfunktion f[X,Y] kann z. B. der Restastigmatismus eines Brillenglases im Design sein, das ist die Cyl-Komponente einer Astigmatismusüberlagerung aus den Werten Sph, Cyl, Ax minus den Rezeptwerten für das betrachtete Brillenglas.

Die Gewichtsverteilung G[f[X,Y]] für das Gewichten der lokalen Abweichung F[X,Y] kann im Übrigen auch eine Verteilungsfunktion für die Blickrichtungs-Häufigkeit beim bestimmungsgemäßen Brillenglas-Gebrauch sein.

Für Blickrichtungen, an denen bei einem Brillenglas z. B. die unvermeidlichen Restfehler größer sind, stört auch eine kleine Abweichung weniger als für die Blickrichtungen, an denen Restfehler klein sind, weil der Träger die Punkte auf dem Glas mit den größeren Restfehlern durch entsprechende Kopfbewegungen vermeidet, so dass der Blick meistens durch Punkte mit kleinen Restfehlern fällt.

Erfindungsgemäß wird so mit einer Gewichtsverteilungen G[X,Y] berücksichtigt, dass ein Brillenglas an verschiedenen Stellen verschieden intensiv benutzt wird. Eine zweckmäßige, vorteilhafte Gewichtsverteilung G[X,Y] fällt deshalb zu den Rändern eines Brillenglases hin ab.

Eine Idee der Erfindung ist es insbesondere, eine optische Größe für das Brillenglas, die mehrere Komponenten hat, mit einer Gewichtsverteilung zu bewerten, die ebenfalls mehrere Komponenten aufweist, z. B. eine Gewichtsverteilung, die eine Komponente für die dioptrischen Größen hat, eine weitere für die Vertikalkomponenten der prismatischen Ablenkung etc.

Eine Idee der Erfindung besteht auch darin, dass die Gewichtsverteilung G[X,Y] die geometrische Form des Brillenglases in einem gerandeten Zustand berücksichtigt. D. h., dass an Stellen, die es bei dem Brillenglas nach dem Einschleifen in eine Fassung nicht mehr gibt, die Gewichtsverteilung G[X,Y] auf den Wert Null gesetzt wird. Eine Idee der Erfindung ist es auch, die Gewichtsverteilung G[X,Y] so zu wählen, dass Punkte des Brillenglases, an denen der Astigmatismus im Design stärker vom Rezeptastigmatismus abweicht, niedrig gewichtet werden. Diese Punkte entsprechen nämlich bei bestimmungsgemäßer Anordnung des Brillenglases vor dem Auge des Brillenträgers nur selten benutzten Blickrichtungen.

Eine Idee der Erfindung ist es auch, die Gewichtsverteilung G[X,Y] so zu bilden, dass Stellen auf einem Gleitsichtglas bei der Summation der vertikalen Abweichungen für das linke/rechte Auge gering gewichtet werden, an denen die Vertikalkomponente der prismatischen Ablenkung für beide Augen nach Design mehr voneinander abweicht als im Nah- oder im Fernbereich.

Insbesondere ist es eine Idee der Erfindung, dass die Gewichtsverteilung G[X,Y] für die lokale Abweichung F[X,Y] beider Augen voneinander, wenn diese auf den gleichen Punkt im Objektbereich blicken, den Wert Null annimmt, wenn die berechnete lokale Abweichung F[X,Y] z. B. einen vorgegebenen Wert W unterschreitet. Zu bemerken ist, dass bei einer solchen beidäugigen Durchrechnung die {X,Y}-Koordinaten für das zweite Auge nicht identisch mit derjenigen für das erste sind. Hier kommt es darauf an, dass beide Augen den gleichen Punkt im Objektbereich fixieren.

Alternativ oder zusätzlich kann die Gewichtsverteilung auch eine von einem Sollwert S[X,Y] für eine lokale optische Größe abhängige Funktion und/oder eine von den berechneten lokalen Abweichungen F[X,Y] abhängige Funktion sein, insbesondere eine Funktion, die den Wert Null annimmt, wenn die berechnete lokale Abweichung F[X,Y] einen vorgegebenen Wert W unterschreitet.

Eine Idee der Erfindung ist auch, statt einer gewöhnlichen gewichteten Mittelwertbildung über berechnete lokale Abweichungen F[X,Y] z. B. im Fall von optischen Größen in Form von Gesamtvergrößerungsfaktoren, die Abweichungen als Quotienten Soll/Ist zu berechnen und statt des Mittelwerts der Quotienten einen gewichteten Mittelwert von deren Logarithmen zu verwenden und dann das Ergebnis auch wieder zum Exponenten zu nehmen. Gemäß der Erfindung wird das Qualitätsmaß Q bevorzugt in einer Qualitätsvorschrift nach einem integralen Kriterium bewertet. Nach der Erfindung können darüber hinaus auch die Wirkungen in einem Scheitelbrechtwertmesser-Strahlengang an den Bezugspunkten berechnet und mit den entsprechenden Solldaten verglichen werden.

Eine Idee der Erfindung besteht auch darin, vor dem Gewichten für die berechneten lokalen Abweichungen F[X,Y] eine Norm zu berechnen, z. B. den Betrag, d. h. die L1-Norm. Indem diese Norm zu einem Qualitätsmaß Q aufsummiert wird, ergibt sich eine integrale Größe.

Als weitere Varianten für das Ermitteln von einem Qualitätsmaß Q kann auch z. B. für die lokalen Abweichungen F[X,Y] eine Ln-Norm mit n= 2, 4, ... etc. gebildet werden oder auf andere Weise eine integralen Größe berechnet werden, in welche die entsprechenden lokalen Abweichungen eingehen.

Nach der Erfindung kann ein Qualitätsmaß Q für ein Brillenglas z. B. entsprechend der nachfolgenden Vorschrift ermittelt werden:

$$Q := \frac{\sum_{i=1}^{n} |F[X_i, Y_i]| * G[X_i, Y_i]}{\sum_{i=1}^{n} G[X_i, Y_i]},$$

wobei | ... | der Absolutbetrag ist.

Zu bemerken ist, dass bei den dioptrischen Abweichungen {sph, cyl, ax} insbesondere eine Mittelwertbildung über die ersten beiden Komponenten von Vorteil ist. Hier bildet man z. B. gewichtete Summe für die Abweichungen von sph, eine für cyl oder gleich für $sph^2 + cyl^2$. Besonders vorteilhaft ist es in diesem Fall, für das Ermitteln von dem Qualitätsmaß Q aus der gewichteten gemittelten Summe noch die Wurzel zu ziehen.

Eine Idee der Erfindung ist es auch integrale Qualitätsmaße für einzelne Kategorien aus den lokalen Größen getrennt zu ermitteln, z. B. dioptrische Abweichungen, Vertikalprismenabweichung links/rechts und Gesamtvergrößerungsdifferenz links/rechts und die so gebildeten integralen Zwischenergebnisse ganz zum Schluss passend zueinander gewichtet zu einer einigen Kennzahl zu verbinden. Je nach Art, wie man die Gewichtungen und die integralen Größen berechnet, kann man das alles jedoch auch in einem Durchgang berechnen.

Zu bemerken ist, dass eine Gewichtsverteilung G[X,Y] für das Gewichten der lokalen Abweichung F[X,Y] auch so gestaltet werden kann, dass die Lage der Bereiche eines Brillenglases, die ein höheres Gewicht bekommen, von Brillenglas zu Brillenglas individuell unterschiedlich ist. Eine Gewichtsverteilung kann nach der Erfindung auch z. B. von der Progressionslänge, der Addition, dem Augenabstand, d. h. dem Pupillenabstand, dem Hornhaut-Scheitelabstand, der Grundkurve, der Form der Brillenfassung allgemein, insbesondere der Größe, der Vorneigung und dem Fassungsscheibenwinkel abhängig sein.

D. h., damit ist auch die Gewichtsverteilung individuell, die bei einer integralen Bewertung zweckmäßigerweise heranzuziehen ist. Beispielsweise kann man für diese Gewichtsverteilung eine verwenden, die aus der abgeleitet ist, die beim ursprünglichen Brillenglasdesign verwendet oder gar mit dieser identisch ist.

Beim Design eines Brillenglases kommen ebenfalls Gewichtsverteilungen G[X,Y] vor, mit denen man die einzelnen Komponenten einer optischen Durchrechnung in der Gebrauchsstellung gewichtet. Statt die Gewichtsverteilungen aus den Restastigmatismen der Durchrechnung durch die schließlich im Design berechnete Soll-Topographie in der vorgesehenen Gebrauchsstellung des Glases zu berechnen, kann man natürlich auch die im Design selbst verwendeten Gewichtsverteilungen in einer Qualitätsbeurteilung flächenhaft gemessener Brillengläser verwenden.

Schließlich kann man auch völlig ohne Vorgabe einer Solltopographie arbeiten, z. B. wenn man ein Brillenglas nach seinen eigenen Qualitätsmaßstäben beurteilen will, dessen Soll-Topographie man nicht hat: Man rekonstruiert die Topographie des Glases, berechnet die optischen Wirkungen für {X,Y} und betrachtet dabei insbesondere den Restastigmatismus (cyl-Wert): Abhängig von dessen Größe stellt man in der zuvor beschriebenen Weise dann eine Gewichtsfunktion auf und berechnet damit die integralen Qualitätsmaße. Zusätzlich kann dann z. B. auch festgehalten werden, für welche Flächengröße oder, um unabhängig vom Hornhaut-Scheitelabstand zu sein, für welche Raumwinkelgröße z. B. merkliche Astigmatismen unterschritten werden. Das mittlere integrale Qualitätsmaß und die zugehörigen Flächen bzw. Raumwinkel trägt dann die Information, wie gut die tatsächliche Wirkungskorrektur eines Glases ist, und ermöglicht einen Vergleich mit anderen Gleitsichtgläsern ähnlicher Wirkungscharakteristik (hartes oder weiches Design).

Außerdem kann man dann auch noch eine Durchrechnung für ein Augenpaar machen: entweder mit dem zweiten Brillenglas, das zu dem Rezept gehört oder mit dem um die Y-Achse gespiegelten Brillenglas: In dieser beidäugigen Durchrechnung kann man zusätzlich die Abweichungen der Vertikalkomponenten der prismatischen Wirkungen gewichtet summieren und daraus eine wichtige Kennzahl für die Verträglichkeit bilden. Ebenso kann man den Gleichlauf der Gesamtvergrößerung integral zu einer Kenngröße zusammenfassen und bewerten oder in ein integrales Gesamtergebnis einfließen lassen.

Das berechnete Qualitätsmaß Q wird erfindungsgemäß in einer Qualitätsvorschrift mit einem Schwellwert T verglichen wird, um aus dem Vergleich mit dem Schwellwert T eine Pass-Fail-Entscheidung zutreffen.

Es sei bemerkt, dass es von Vorteil ist, wenn die Qualitätsvorschrift für das Bewerten der Qualität von einem Brillenglas die Güte der Messung, d. h. das Messrauschen für das Ermitteln der Topografie berücksichtigt. Für eine geeignete Qualitätsvorschrift können auch Einzelheiten bei der Rekonstruktion der Topografie variiert werden, eine Quadraturmethode bei der Integration der gewichteten optischen Effekte modifiziert, die Art und Gestaltung von Gewichtsfunktionen für bestimmte optische Effekte zur Berechnung von integraler Kennzahlen, die Art der Zusammenführung mehrerer Kennzahlen zu einer einzigen und/oder die Auswahl der Raster {X_M,Y_M} für die Durchrechnung geändert werden, man kann Abweichung unterhalb von Schwellen in der Integration ganz unterdrücken oder, wie im Fall einer L2-Norm, nichtlineare funktionale Zusammenhänge verwenden, um den Einfluss nicht wahrnehmbare Abweichungen auf die Qualitätskennziffer zu unterdrücken usw..

Statt die Wirkungen durch das Design in der Auswertung neu zu berechnen, kann man natürlich auch in tabellierte Wirkungen interpolieren, die im ursprünglichen Design berechnet wurden oder statt dessen sogar die Zielverteilung dieser Wirkungen, die in der individuellen Berechnung der zu fertigenden Fläche aufgrund ursprünglicher Designüberlegungen (Target-Design) zugrunde gelegt wurde, denn beim individuellen Design von Gleitsichtgläsern anhand individueller Gebrauchsbedingungen kommt normalerweise eine ähnliche Verteilung der optischen Fehlwirkungen zustande wie beim Target-Design für ein Rezept mit gleicher Nah- und Fernwirkung und gleicher Progressionslänge, jedoch Rezept-Astigmatismus 0. Es ist dabei lediglich der Astigmatismus für alle Blickrichtungen um den nahezu gleichen Betrag verschoben, nämlich den Rezept-Astigmatismus.

Die Erfindung erstreckt sich außerdem auch auf ein Computerprogramm mit einem Programmcode, der dazu ausgebildet ist, ein vorstehend beschriebenes Verfahren auszuführen, wenn der Programmcode auf einem Computer ausgeführt wird.

Im Folgenden wird die Erfindung anhand der in der Zeichnung in schematischer Weise dargestellten Ausführungsbeispiele näher erläutert.

Es zeigen:

Fig. 1  eine Vorrichtung für die Qualitätskontrolle eines Brillenglases;

Fig. 2  das Berechnen von möglichen Stellungen der Brillenglas-Tangentialebene in einer Messvorrichtung mit reflektierten Lichtstrahlen;

Fig. 3    einen Teilschnitt eines Brillenglases in der Vorrichtung mit reflektierten Lichtstrahlen;

Fig. 4    die Rekonstruktion der Topografie einer optisch wirksamen Fläche des Brillenglases in einer ebenen Schnittebene;

Fig. 5    ein Raster mit Punkten auf dem Brillenglas für das Ermitteln der optischen Wirkung des Brillenglases mit einer Strahldurchrechnung;

Fig. 6    eine Verteilung des Restastigmatismus bei einem Gleitsichtbrillenglas, das gemessen werden soll;

Fig. 7    eine Gewichtsverteilung für das Gewichten der lokalen Abweichung der berechneten optischen Wirkung des gemessenen Brillenglases von den zugehörigen Solldaten;

Fig. 8    und Fig. 9 weitere Beispiele für Raster mit Punkten auf einem Brillenglas, an denen lokale Istwerte für die optischen Wirkungen des Brillenglases berechnet werden.

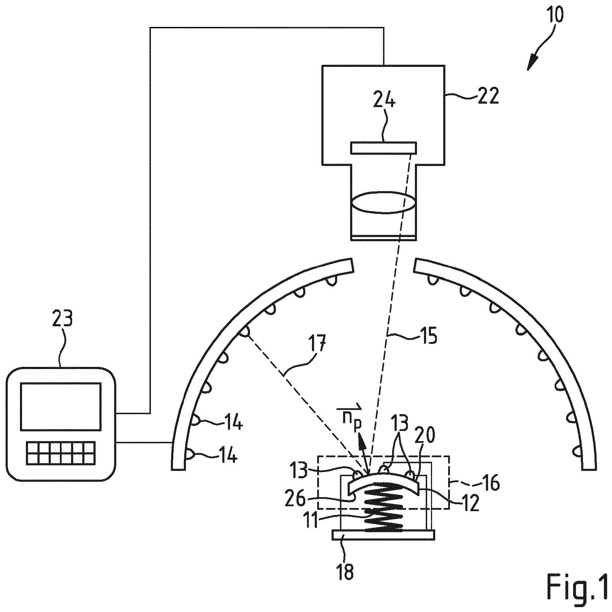

Die in der Fig. 1 gezeigte Vorrichtung 10 für die Qualitätskontrolle eines Brillenglases 12 hat eine Vielzahl von UV-LEDs 14, die als Punktlichtquellen wirken und auf den Gitterpunkten eines sphärisch gekrümmten zweidimensionalen Gitternetzes angeordnet sind. Das zu kontrollierende Brillenglas 12 befindet sich in einem Aufnahmebereich 16. In dem Aufnahmebereich 16 ist das Brillenglas 12 auf einer Einrichtung 18 zum Positionieren angeordnet. In der Einrichtung 18 zum Positionieren liegt das Brillenglas 12 an einer Dreipunktauflage 13 an, die Kugeln aufweist, gegen die es mit der Kraft einer Feder 11 gedrückt ist. Die genauen Koordinaten der Kugeln in einem vorrichtungsfesten Koordinatensystem sind bekannt. Damit ist auch die Lage von drei Punkten auf der Offsetfläche der optisch wirksamen Fläche 20 des Brillenglases 12 in dem vorrichtungsfesten Koordinatensystem festgelegt. Die Vorrichtung 10 enthält eine Kamera 22. Die Kamera 22 dient für das Erfassen einer Helligkeitsverteilung, die von dem an der optisch wirksamen Fläche 20 reflektierten Licht der UV-LEDs 14 mit UV-LED-Strahlen 17 auf einem Bildsensor 24 in der Kamera 22 hervorgerufen wird. Die Kamera 22 sieht das Spiegelbild einer UV-LED entlang einem Sichtstrahl 15.

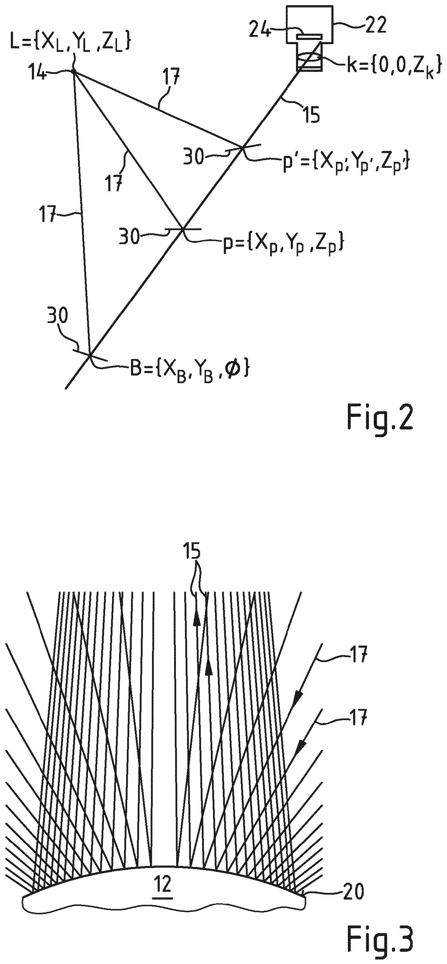

Die Helligkeitsverteilung auf dem Bildsensor 24 enthält die Information über die Neigung der Tangentialebenen an die optisch wirksame Fläche 20 des Brillenglases 12 an denjenigen Stellen, an denen das Licht der UV-LEDs 14 so reflektiert wird, dass es die Kamera 22 einfängt. Die Lage eines von der Kamera 22 gesehenen Reflexes ist mit einer Mannigfaltigkeit von Lösungen über die lokale Neigung und die Z-Position verknüpft, was nachfolgend anhand von Fig. 2 näher beschrieben ist.

Die Kamera 22 bildet mit der Rechnereinheit 23, den UV-LEDs 14 und der Einrichtung 18 zum Positionieren ein System für das Ermitteln der Topografie der zu messenden optisch wirksamen Fläche 20 des Brillenglases 12.

Für das Ansteuern der UV-LEDs 14 und der Kamera 22 gibt es in der Vorrichtung 10 eine Rechnereinheit 23 mit einem Computerprogramm, das aus der auf dem Bildsensor 24 der Kamera 22 erfassten Helligkeitsverteilung die Topografie der optisch wirksamen Fläche 20 des Brillenglases 12 in Form einer Punktemenge {P[X,Y] ={$X_{vp}$, $Y_{vp}$, $Z_{vp}$}, ...} mit den Punkten P[X,Y] und zugehörigen Funktionskeimen $V_p$[X,Y] ermittelt.

Für Punkte P[X,Y] berechnet das Computerprogramm jeweils den lokalen Istwert I[X,Y] und seine Abweichung F[X,Y] von einem Sollwert S[X,Y] für optische Größen des Brillenglases 12 in einer Gebrauchsstellung. Dann gewichtet es die Abweichungen F[X,Y] mit einer ortsabhängigen Gewichtsverteilung G[X,Y], um ein Qualitätsmaß Q für die Brillenglas-Qualität auszugeben.

Die Fig. 2 erläutert für die in Fig. 1 gezeigte Anordnung den Zusammenhang zwischen der Brillenglas-Tangentialebene und der Z-Position entlang eines Sichtstrahls 15. Der Punkt B ist der Schnittpunkt des Sichtstrahls mit der Bezugsebene, bei der die Z-Koordinate in dem vorstehend erwähnten vorrichtungsfesten Koordinatensystem Null ist. P und P' sind mögliche Punkte auf der Brillenglasoberfläche, die die Reflexionsbedingung erfüllen, wenn der Sichtstrahl dort das Glas schneiden würde und die Tangentialebene 30 die dort ersichtliche Lage bzw. einen Normalenvektor mit der dieser Lage entsprechenden Richtung hätte.

Für einen Punkt P:={$X_P$,$Y_P$,$Z_P$} ist die Neigung der Tangentialebene 30 einer Fläche, die dort den Punkt L:={$X_L$,$Y_L$,$Z_L$} reflektiert, gegeben durch

$$\frac{\partial Z}{\partial X} = \frac{d_L * X_P - d_K * (X_L - X_P)}{d_L * (Z_K - Z_P) + d_K * (Z_L - Z_P)},$$

$$\frac{\partial Z}{\partial Y} = \frac{d_L * Y_P - d_K * (Y_L - Y_P)}{d_L * (Z_K - Z_P) + d_K * (Z_L - Z_P)},$$

mit

$$d_L = \frac{1}{\sqrt{(X_L - X_P)^2 + (Y_L - Y_P)^2 + (Z_L - Z_P)^2}} \, ,$$

und

$$d_K = \frac{1}{\sqrt{X_P^2 + Y_P^2 + (Z_K - Z_P)^2}} \, .$$

Weil die optisch wirksame Fläche 20 eines Brillenglases 12 eine im Regelfall bis auf wenige Ausnahmestellen glatte Fläche ist, können ausgehend von z. B. drei bekannten Punkten der Dreipunktauflage 13 die Z-Werte und die zugehörigen Neigungen für die Stellen iterativ bestimmt werden, an denen das Licht der UV-LEDs 14 so reflektiert wird, dass es die Kamera 22 einfängt.

Für das Brillenglas sind die Auflagepunkte an den Kugeln der Dreipunktauflage 13 unbekannt. Die Position der Mittelpunkte der Kugeln ist dagegen bekannt. Die Koordinaten der Auflagepunkte können jedoch mit einem iterativen Berechnungsverfahren berechnet werden, bei dem als Startbedingung angenommen wird, dass die Auflagepunkte die Berührpunkte der Kugeln mit einer Ebene sind. Nachdem man damit zu einer Lösung der Flächenrekonstruktion kommt, was nachfolgend erläutert wird, kann man dann in einer Nachiteration die gefundene Lösung an die wirkliche Berührsituation heranführen.

Zu bemerken ist, dass es alternativ hierzu grundsätzlich auch möglich ist, mit einem entsprechenden zu den drei bekannten Punkten auf einer Offsetfläche der zu suchenden Fläche diejenige Lösung zu bestimmen, die zu den beobachteten Reflexen passt.

Für die Glasoberfläche setzt man lokal einen funktionellen Verlauf in Form von Funktionskeimen an, die lokal durch Ebenenstücke oder Polynome beschrieben sind. Zu diesen Funktionskeimen gehört jeweils eine Umgebung, in der ein betreffender Funktionskeim die Fläche beschreibt. Vorteilhafterweise überdecken alle Umgebungen der Funktionskeime zusammen die Brillenglasfläche - zweckmäßig überlappen sich die Bereiche der Funktionskeime sogar etwas, mindestens dort, wo die optisch wirksame Fläche 20 des Brillenglases 12 glatt ist, was sich z. B. durch mathematisches Vergleichen benachbarter Messwerte feststellen lässt.

Das Computerprogramm in der Rechnereinheit 23 ermittelt die Koeffizienten der Funktionskeime so, dass benachbarte Funktionskeime annähernd die gleichen Z-Werte ergeben, d. h., dass die Funktionskeime in dem Überlappungsbereich ihrer Anwendungs-Umgebungen in wenigstens einem Punkt übereinstimmen oder dass die Summen über die Quadrate der Abweichungen mit den jeweils betrachteten Nachbar-Funktionskeimen entlang der Schnittstellen oder in Überlappungsbereichen minimiert und ausreichend klein sind. Das Computerprogramm verifiziert dann in einer Simulationsrechnung, dass die Helligkeitsverteilung bei der durch die Funktionskeime beschriebenen Fläche auf dem Bildsensor 24 in der Kamera 22 mit der tatsächlich auf dem Bildsensor 24 erfassten Helligkeitsverteilung zusammenpasst.

Die Fig. 3 zeigt einen Schnitt durch ein Brillenglas 12 mit reflektierten Lichtstrahlen. Hier sind die an der zu messenden Fläche 20 reflektierten UV-LED-Strahlen 17 gezeigt, die in der Richtung der Pfeile als Sichtstrahlen 15 zur Kamera 22 reflektiert werden.

Das Brillenglas 12 hat ein Nahteil, das sich in der rechten Bildhälfte befindet. In der Mitte von Fig. 3 bilden die Sichtstrahlen 15 eine Lücke, weil die UV-LEDs 14 (siehe Fig. 2) sich nicht beliebig nahe an die Kamera 22 rücken lassen.

Durch geschicktes Ein- und Ausschalten ermittelt das Computerprogramm in der Rechnereinheit 23, von welcher der UV-LEDs 14 einer der mit der Kamera 22 eingefangenen Lichtreflexe an der optisch wirksamen Fläche 20 des Brillenglases 12 herrührt.

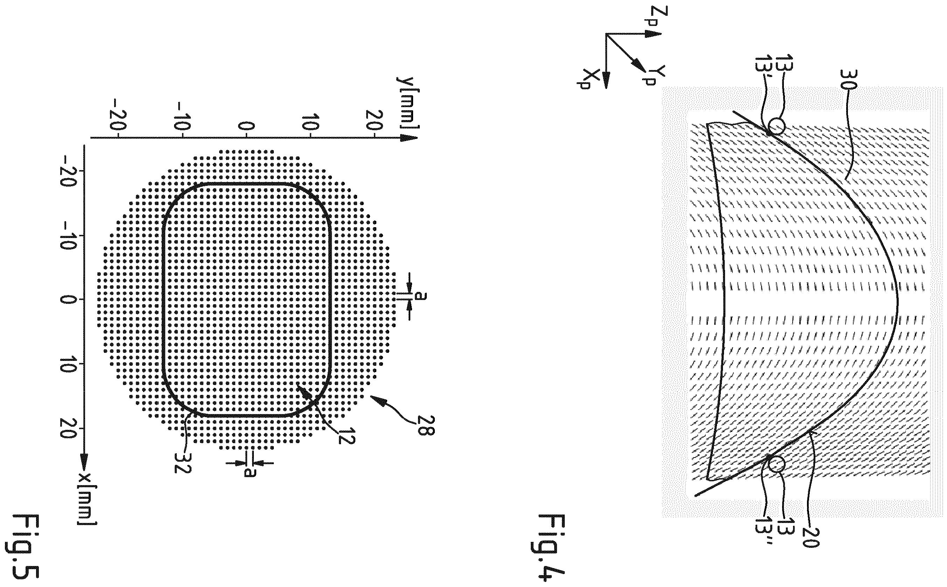

Die Fig. 4 zeigt das Prinzip für das Ermitteln der Topografie der optisch wirksamen Fläche 20 des Brillenglases 12 in einem ebenen Schnitt bei einem Messverfahren nach der Art von Fig. 1. In der Fig. 4 sind zwei Startpunkte 13', 13" auf dem Brillenglas 12 zu sehen, das können z. B. die vorstehend beschriebenen Auflagepunkte an der Dreipunktauflage 13 sein. Aus der mit dem Bildsensor 24 in der Kamera 22 erfassten Helligkeitsverteilung berechnet die Rechnereinheit 23 für die Sichtstrahlen 15 dann die möglichen Höhen $Z_P$ einer Tangentialebene bzw. eines Tangentenstücks 30. Hierdurch ergibt sich dann ein Richtungsfeld, wie es beispielhaft in der Fig. 4 gezeigt ist, das die Rechnereinheit 23 durch Integration in einen Profilschnitt für das Brillenglas 12 überführt.

Die Güte für einen berechneten Profilschnitt hängt dabei insbesondere von der Dichte der Lichtreflexe und vom Rauschen der Messwerte ab.

Um inkompatible Integrationsergebnisse bei unterschiedlichen Integrationspfaden zu vermeiden, wendet die Rechnereinheit 23 in dem Computerprogramm hier Techniken ähnlich dem vorstehend erwähnten Phase Unwrapping an, die aus der Interferometrie geläufig sind. Alternativ oder zusätzlich ist es auch möglich, inkompatible Integrationsergebnisse zu vermeiden, indem die Integrationswege geschickt gewählt werden oder indem die Vermittlung und der Ausgleich der Fehler bei der Rekonstruktion entlang verschiedener Integrationspfade erfolgt.

Wenn die optisch wirksame Fläche 20 des Brillenglases 12, wie in der Fig. 3 zu sehen, eine glatte Fläche ist, also nicht z. B. eine Bifokalfläche mit Sprüngen, ist es möglich, die Topografie der Fläche 20 mit einer mathematischen Funktion zu beschreiben, die mit entsprechend vielen Parametern parametrisiert ist, z. B. als für das ganze Brillenglas geltende Entwicklung in Zernikepolynome oder in eine andere geeignet Entwicklung, eventuell auch durch lokale Entwicklungen durch Funktionskeime. Dann kann die Topografie der Fläche 20 ausgehend von einem Parametervektor rekonstruiert werden, der bei Beginn der Berechnung die Ebene durch die bekannten Auflagepunkte oder eine annähernd leicht gewölbte Kugel beschreibt, die auf den Unterstützungskugeln aufliegt. Im Anschluss an Iterationsschritte wird auf der Grundlage der jeweils durch den Parametervektor beschriebenen Oberfläche berechnet, wo auf dem Bildsensor 24 der Kamera 22 die entsprechenden Reflexbilder der UV-LEDs liegen. Die Differenzen dieser Berechnung zu der in der Kamera 22 erfassten Helligkeitsverteilung führen dann auf einen Fehlervektor bezüglich der von der Kamera beobachteten Helligkeitsverteilungen. Um die Topografie der Fläche 20 zu erhalten, wird nun der oben angegebene Parametervektor so lange variiert, bis eine Norm für den Fehlervektor, z. B. die L2-Norm minimal ist. Durch die mit diesem Parametervektor definierte mathematische Funktion, oder im Fall von lokalen Funktionskeimen durch die Funktionskeime, wird dann die in der Vorrichtung 10 ermittelte Topografie der Fläche 20 des Brillenglases 12 beschrieben.

Bei diesem Verfahren ist es von Vorteil, wenn in die Variation des Parametervektors die Sicherheit der mit dem Bildsensor der Kamera 22 erfassten Reflexbilder der UV-LEDs 14 in Form einer Gewichtung der jeweiligen Primärmesswerte berücksichtigt wird.

Die aus der Helligkeitsverteilung auf dem Bildsensor 24 in der Kamera 22 ermittelte Topografie der Fläche 20 muss der Randbedingung genügen, dass sie die Kugeln der Dreipunktauflage berührt.

Weil es gegebenenfalls schwierig ist, Funktionen anzugeben, die bereits a priori diese Bedingung erfüllen, ist es von Vorteil, wenn man bei der entsprechenden Berechnung auf die Anlagebedingung verzichtet und die Abweichung der betreffenden Funktion von den Anlagebedingungen als eine zusätzliche Komponente der Abweichung F[X,Y] für die Reflexbedingungen des Brillenglases 12 im Rekonstruktionsschritt. Die Abweichung von der Anlagebedingung kann nämlich auch als Bestandteil des Fehlervektors in der Topographierekonstruktion verstanden werden. Vorliegend wird dann der entsprechende Fehlervektor lediglich um weitere Komponenten erweitert. Diesen zusätzlichen Komponenten des Fehlervektors weist man bei der Minimierung des Fehlervektors ein sehr hohes Gewicht bei, um zu gewährleisten dass die vorstehend erläuterte Minimierungsrechnung die Reflexionsbedingungen erfüllt und gleichzeitig die Randbedingung für die Auflagepunkte am Ende der Iteration ebenfalls hinreichend genau erfüllt.

Der vorstehend beschriebene Funktionskeim-Ansatz ist wie der globale für das Ermitteln einer optisch wirksamen Fläche eines Brillenglases letztlich eine Art Integrationsverfahren. Der Funktionskeim-Ansatz muss dabei so umgesetzt werden, dass das Integrationsergebnis unabhängig von einem gewählten Integrationspfad wird. Bei einem Ansatz mit einer global die Fläche beschreibenden Funktion ist man beschränkt auf die Varianten, die so eine Fläche per Variation ihres Parametervektors annehmen kann, dafür ergibt sich der stetige oder sogar glatte Anschluss automatisch. Der Funktionskeimansatz legt der gefundenen Beschreibung weniger Grenzen auf, erfordert aber ähnliche Zwischenschritte wie beim Phase-Unwrapping der Interferometrie, indem die Nachbarbedingungen benachbarter Funktionskeime abzustimmen sind.

In einem nächsten Schritt nimmt das Computerprogramm in der Rechnereinheit 23 der Vorrichtung 10 dann auf der Grundlage der ermittelten Topografie für die optisch wirksame Fläche 20 des Brillenglases 12 unter Berücksichtigung der Mittendicke des Brillenglases 12 und dessen Brechungsindex n eine Strahldurchrechnung in Gebrauchsstellung des Brillenglases auf dem in der Fig. 5 gezeigten Raster 28 vor. Das Raster 28 ist quadratisch z. B. mit der Gitterkonstanten a = 1 mm. Mittels der Strahldurchrechnung werden dann lokale Istwerte für die optische Wirkung des Brillenglases 12 bestimmt.

Um Rechenzeit zu sparen, erfolgt die Strahldurchrechnung jedoch nicht für solche Punkte des Brillenglases 12, die außerhalb des vorgesehenen Glasrands 32 liegen.

Zu bemerken ist, dass mit der in Figur 1 gezeigten Vorrichtung 10 grundsätzlich auch die Topografie der Rückfläche 26 des Brillenglases 12 ermittelt werden kann. Dazu muss man das Brillenglas 12 in der Vorrichtung 10 nur umdrehen und wie die optisch wirksame Fläche 20 vermessen. Der Übergang von den Koordinaten in der einen Stellung zu denen in der anderen Stellung muss durch die Glashalterung gewährleistet werden und für die Rechnungen bekannt sein. Alternativ kann man auch eine zweite Anordnung von UV-LEDs und eine zweite Kamera für die Messung der Rückseite in einer Stellung im Gerät vorsehen.

In einem nächsten Schritt vergleicht das Computerprogramm in der Rechnereinheit 23 der Vorrichtung 10 dann die berechneten lokalen Istwerte I[X,Y] für die optische Größe des Brillenglases 12 in Gebrauchsstellung mit lokalen Sollwerten S[X,Y] aus dem Design in Gebrauchsstellung. Dann berechnet das Computerprogramm aus den lokalen Istwerten I[X,Y] und den lokalen Sollwerten S[X,Y] die lokalen Abweichungen F[X,Y], z. B. die lokalen astigmatischen Fehler $F_A[X,Y]$ und die lokalen sphärischen Fehler Fs[X,Y]. Dies kann insbesondere mit der zuvor beschriebenen Methode der Astigmatismusüberlagerung erfolgen.

Je nachdem, in welcher Norm man arbeitet, arbeitet man weiter mit den Absolutbeträgen der punktweisen Abweichungen oder mit deren Quadraten.

Die Differenz F[X,Y] der lokalen Ist- und Sollwerte wird dann in der Rechnereinheit 23 mit einer ortsabhängigen Gewichtsverteilungsfunktion G[X,Y] gewichtet, um auf diese Weise ein Qualitätsmaß Q für das Brillenglas 12 zu erhalten, z. B.:

$$Q := \frac{\sum_{i=1}^{n} |F[X_i, Y_i]| * G[X_i, Y_i]}{\sum_{i=1}^{n} G[X_i, Y_i]} \quad ,$$

wobei | ... | der Absolutbetrag ist.

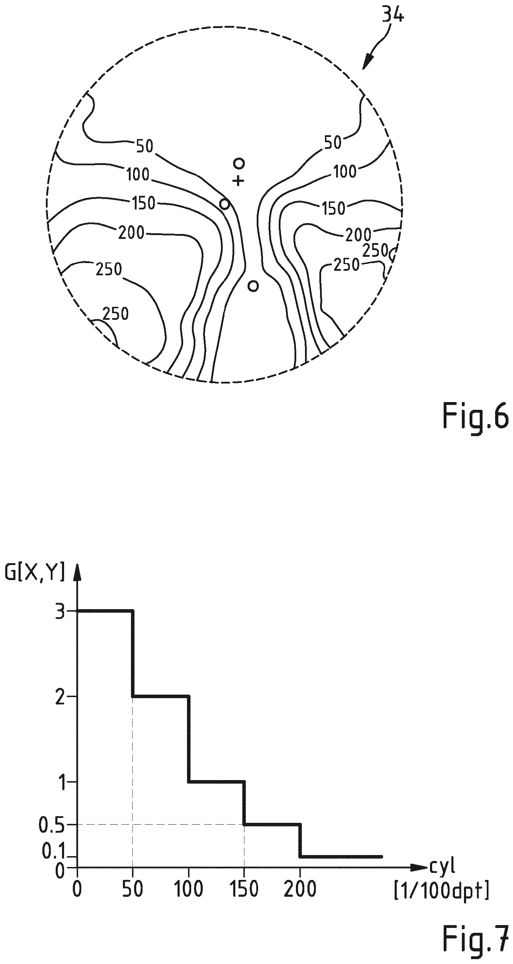

Fig. 6 und 7 erläutern, wie man eine Gewichtsverteilung G[X,Y] für dioptrische Abweichungen F[X,Y] zweckmäßig gestaltet: Fig. 6 zeigt einen Höhenlinienplot 34 über den Restastigmatismus eines Gleitsicht-Brillenglases in der Stellung, den es bei bestimmungsgemäßer Stellung vor dem Auge des Benutzers bewirkt. Bei einem Brillenglas ohne Rezeptastigmatismus, was in einem entsprechenden Rezept an der Angabe $cyl_{Rez}$ = 0 Dpt zu erkennen ist, ist das der trotz aller Designanstrengungen verbliebene Restastigmatismus, den dieses Gleitsichtbrillenglas für die verschiedenen Blickrichtungen vor dem Auge des Benutzers hat. Bei einer Rezeptverordnung mit Astigmatismus, d. h. $cyl_{Rez} \neq 0$, kommt es zusätzlich an auf $ax_{Rez}$, das ist die Astigmatismusachse laut Rezept. Hier ist der Rezeptastigmatismus des ganzen Brillenglases (gekennzeichnet durch {0, $cyl_{Rez}$, $ax_{Rez}$}) für dieses Bild von den für das Design in der Gebrauchsstellung berechneten dioptrischen Wirkungen {sph, cyl, ax} für alle Blickrichtungen jeweils per Astigmatismusüberlagerung abgezogen.

Die Zahlen in den gezeichneten Linien bedeuten den cyl-Wert in 1/100 Dioptrie. Die Fig. 6 zeigt, daß sich der Astigmatismus für verschiedene Blickrichtungen beim gezeigten Design verschieden gut unterdrücken ließ. Im nutzbaren Nahbereich 36 und im Fernbereich 38 gelingt das sehr gut, dafür verbleiben in peripheren Bereichen neben dem Nahteil unvermeidliche Reste.

Fig. 7 zeigt eine zweckmäßige Gewichtsverteilung G[X,Y] für dioptrische Abweichungen F[X,Y] in Form des Restastigmatismus mit dem Wert cyl aus Fig. 6 an Punkten {X,Y}. Für F[X,Y] < 50/100 dpt ist G[X,Y] = 3. Für 50/100 dpt $\leq$ F[X,Y] $\leq$ 100/100 dpt ist G[X,Y] = 2.

In diesem Beispiel verwendet man also eine Gewichtsverteilung G[X,Y], die sich aus dem cyl-Wert der Durchrechnung des Designs in Gebrauchsstellung ergibt. Die Lage und auch die Anzahl der Höhenschichtlinien der Restastigmatismusverteilung hängt von den Rezeptdaten des Brillenglases ab, besonders stark tut sie das von der Addition und der Progressionslänge.

Für ein entsprechend der vorstehenden Formelbeziehung definiertes Qualitätsmaß Q ist z. B. als Qualitätsvorschrift für eine Pass-Fail-Entscheidung der Vergleich mit dem Schwellwert T: = 0,2 dpt (cyl) geeignet: Die Qualitätsvorschrift wird von einem Brillenglas erfüllt, wenn das hierzu ermittelte Qualitätsmaß Q der Beziehung Q < T genügt. Eine modifizierte Ausführungsform für die Qualitätsvorschrift ist, dass über die vorgenannte Bedienung hinaus zusätzlich gefordert wird, dass bei einer Durchrechnung im Scheitelbrechwertmesserstrahlengang in den Bezugspunkten nur Abweichungen vorhanden sind, die auch nach Norm erlaubt sind. Durch diese Und-Verknüpfung mit einer konventionellen Prüfung ist dann z. B. sichergestellt, dass das Glas die Anforderungen nach Norm erfüllt und darüber hinaus in den übrigen Punkten, die die Norm gar nicht behandelt, vernünftigen Anforderungen an die Gebrauchssituation genügt.

Die Gewichtsverteilung G[X,Y] bringt zum Ausdruck, dass das Brillenglas an den Stellen, die beim bestimmungsgemäßen Gebrauch von der Blickrichtung eines Brillenträgers häufig durchsetzt werden, hinreichend gut mit dem Design in Bezug auf den astigmatischen Fehler übereinstimmen soll, dass aber die Stellen des Brillenglases, durch die ein Brillenträger nicht oder nur selten blickt, für die Qualitätsbetrachtung eine geringere Rolle spielen.

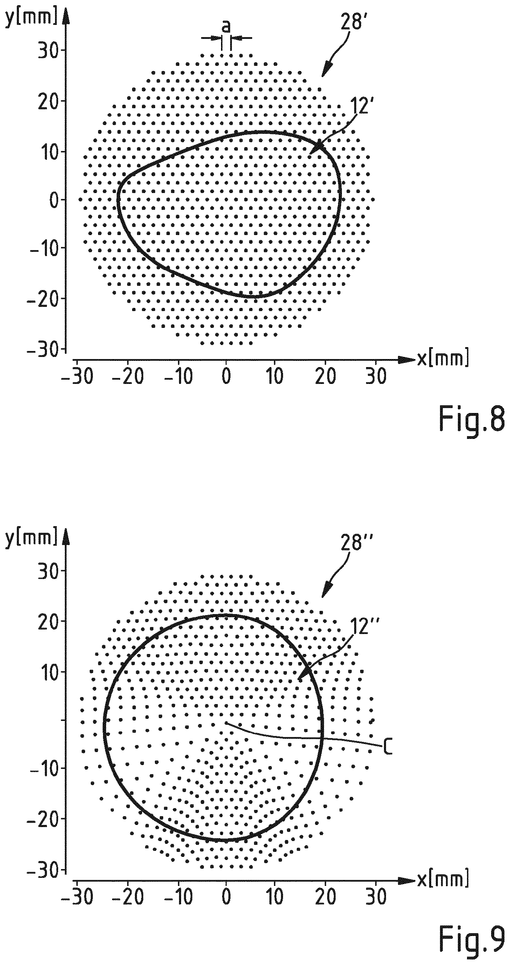

Die Fig. 8 zeigt ein weiteres Beispiel für ein Raster 28' auf einem Brillenglas 12' für das Berechnen der Differenz von Ist- und Sollwerten F[X,Y] = I[X,Y] - S[X,Y] für eine lokale optische Größe, um ein dem vorstehend erläuterten Qualitätsmaß ähnliches alternatives Qualitätsmaß Q für das Kontrollieren der Qualität eines Brillenglases zu ermitteln.

Nach dem Raster 28' werden bei dem Brillenglas 12' hier die Abweichung des Istwerts I[X,Y] von einem Sollwert S[X,Y] an voneinander mit dem Abstand a=2 mm äquidistant beabstandeten Punkten ermittelt.

In der Fig. 9 ist ein weiteres Beispiel für ein Raster 28" auf einem Brillenglas 12" für das Berechnen der Differenz von Ist- und Sollwerten F[X,Y] = I[X,Y] - S[X,Y] für eine optische Größe des Brillenglases, um ein Qualitätsmaß Q für das Bewerten der Qualität eines Brillenglases zu ermitteln.

Die dem Raster 28" entsprechende Strahldurchrechnung wird hier auf einem gegenüber dem in der Fig. 8 gezeigten Raster 28' verzerrten Raster durchgeführt, das sich aus dem Raster 28' ergibt, indem die Punkte in einer Polarkoordinatenbetrachtung mit dem Zentrum C in der tangentialen und in der radialen Richtung verschoben werden. Von diesem Raster nimmt man aber nur die Punkte, die im berandeten Brillenglas noch vorhanden sind, die also innerhalb der eingezeichneten Brillenglaskontur liegen. Diese Methode bewirkt auch eine Gewichtung und sie spart sogar Rechenzeit.

Abweichungen der berechneten Istwerten I[X,Y] für die optische Größe von den entsprechenden Sollwerten S[X,Y] fließen hier mit höherem Gewicht in das integrale Ergebnis für das Qualitätsmaß Q dort ein, wo die optischen Eigenschaften des Brillenglases besonders gut sein müssen. Abweichungen an Stellen des Brillenglases, die seltener benutzt werden, beeinflussen das Qualitätsmaß Q hingegen weniger. Aus dem Grund liegen die Punkte dort weiter auseinander.

Weil kleine Restastigmatismen im Nahteil eines Gleitsichtglases den Seheindruck Brillenträgers kaum beeinträchtigen, kann eine alternative Qualitätsvorschrift für ein anderes Qualitätsmaß Q auch darin bestehen, dass vor einem Aufsummieren der astigmatischen Fehler im Nahbereich (also z. B. für Y<0), alle für das gemessene Glas ermittelten astigmatischen Fehler auf Null gesetzt werden, die vorher kleiner als 0,1 dpt waren.

Ein Brillenglas genügt hier der Qualitätsvorschrift, wenn es aufgrund einer Durchrechnung im Norm-Messungsstrahlengang durch das Modell die Anforderungen der Norm erfüllt und zusätzlich für den gewichteten mittleren Astigmatismusfehler Q gilt: Q ≤ 0,2 dpt.

Um bei einem Brillenglas nicht nur die dioptrischen Wirkungen, sondern auch die Vertikalkomponenten der prismatischen Ablenkungen flächenhaft in ein integrales Qualitätsmaß zusammenzufassen, geht man z. B. folgendermaßen vor: Nach Rekonstruktion der Topographie berechnet man die für jeden Punkt {X,Y} auf dem Brillenglas in der vorgesehenen Anordnung und Ausrichtung vor dem Auge:

$I_{sph}[X,Y]$,          die sphärische Wirkung

$I_{cyl}[X,Y]$, $I_{Ax}[X,Y]$,     die astigmatische Wirkung

$I_{Prv}[X,Y]$,          die Vertikalkomponente der Strahlablenkung

und die entsprechenden Sollgrößen $S_{sph}[X,Y]$, $S_{cyl}[X,Y]$, $S_{Ax}[X,Y]$ und $S_{Prv}[X,Y]$. Man berechnet dann die Astigmatismusüberlagerung aus $I_{sph}[X,Y]$, $I_{cyl}[X,Y]$, $I_{Ax}[X,Y]$ mit $-S_{sph}[X,Y]$, $-S_{cyl}[X,Y]$, $S_{Ax}[X,Y]$. Diese liefert die dioptrischen Fehler $F_{sph}[X,Y]$, $F_{cyl}[X,Y]$, $F_{Ax}[X,Y]$. Die dritte Komponente der optischen Größe bleibt bei diesem Beispiel nun unberücksichtigt. Außerdem berechnet man $Fp_{rv}[X,Y]$, d. h. die Abweichung der Vertikalkomponente der prismatischen Ablenkung von der entsprechenden Sollgröße.

Hier werden für das Ermitteln von einem Qualitätsmaß Q eine als 3-Tupel ausgebildete Gewichtsverteilung G[X,Y] mit den Komponenten $G_{sph}[X,Y]$, $G_{cyl}[X,Y]$ und $G_{Prv}[X,Y]$ festgelegt, wobei die Verteilungsfunktion dieser Komponenten jeweils z. B. dem anhand der Fig. 6 und Fig. 7 beschriebenen Beispiel für eine Gewichtsverteilung entspricht, bei $G_{Prv}[X,Y]$ verwendet man in analoger Weise eine Gewichtsverteilung, die aus einer Durchrechnung für beide Augen herrührt, die im Objektbereich die gleichen Punkte fixieren und bei der Punkte mit einer kleinen Abweichung der Vertikalkomponenten der prismatischen Abweichungen beider Augen voneinander ein hohes Gewicht $G_P$ bekommen. Als Qualitätsmaß Q berechnet man hier:

$$Q = \sqrt{\frac{\sum_{i=1}^{n} F_{sph}[X_i,Y_i]^2 * G_{sph}[X_i,Y_i]}{\sum_{i=1}^{n} G_{sph}[X_i,Y_i]}} + \sqrt{\frac{\sum_{i=1}^{n} F_{cyl}[X_i,Y_i]^2 * G_{cyl}[X_i,Y_i]}{\sum_{i=1}^{n} G_{cyl}[X_i,Y_i]}} +$$

$$\sqrt{\frac{\sum_{i=1}^{n} F_{Prv}[X_i,Y_i]^2 * G_{Prv}[X_i,Y_i]}{\sum_{i=1}^{n} G_{Prv}[X_i,Y_i]}}$$

Eine sinnvolle Qualitätsvorschrift für das Brillenglas ist hier z. B.: Q ≤ 0,8.

**Bezugszeichenliste:**

| | |
|---|---|
| 10 | Vorrichtung |
| 11 | Feder |
| 12, 12', 12" | Brillenglas |
| 13 | Dreipunktauflage |
| 13', 13" | Startpunkt |
| 14 | UV-LED |
| 15 | Sichtstrahl |
| 16 | Aufnahmebereich |
| 17 | LED-Strahl |
| 18 | Einrichtung zum Positionieren |
| 20 | Fläche |
| 22 | Kamera |
| 23 | Rechnereinheit |
| 24 | Bildsensor |
| 26 | Rückfläche |
| 28, 28', 28" | Raster |
| 30 | Tangentialebene, Tangentenstück |
| 32 | Glasrand |
| 34 | Höhenlinienplot |
| 36 | Nahbereich |
| 38 | Fernbereich |

**Patentansprüche**

1. Verfahren für die Qualitätskontrolle eines Brillenglases (12, 12', 12") mit folgenden Schritten:

   Ermitteln der Topografie von wenigstens einer optisch wirksamen Fläche (20) des Brillenglases (12);
   Berechnen von lokalen Istwerten (I[X,Y]) wenigstens einer optischen Größe des Brillenglases (12) unter Berücksichtigung der ermittelten Topographie;
   Berechnen von lokalen Abweichungen (F[X,Y]) der berechneten lokalen Istwerte (I[X,Y]) von lokalen Sollwerten (S[X,Y]) für die wenigstens eine optische Größe des Brillenglases;
   Ermitteln von einem Qualitätsmaß (Q) für das Brillenglas (12, 12', 12"), indem die berechneten lokalen Abweichungen (F[X,Y]) ausgewertet werden; und
   Bewerten von dem ermittelten Qualitätsmaß (Q) nach einer Qualitätsvorschrift,
   **dadurch gekennzeichnet, dass**
   das Qualitätsmaß (Q) aus einem Mittelwert M der berechneten lokalen Abweichungen (F[X,Y]) an über das Brillengas verteilten Rasterpunkten (P[X,Y]) berechnet wird, wobei der Mittelwert M ein mit einer Gewichtsverteilung (G[X,Y]) gewichteter Mittelwert der berechneten lokalen Abweichungen (F[X,Y]) ist, wobei
   die Gewichtsverteilung (G[f[X,Y]]) für das Gewichten der lokalen Abweichung (F[X,Y]) eine Funktion ist, die den Wert Null annimmt, wenn die berechnete lokale Abweichung (F[X,Y]) einen vorgegebenen Wert (W) unterschreitet.

2. Verfahren nach Anspruch 1, **dadurch gekennzeichnet, dass** die wenigstens eine optische Größe (V) die optische Wirkung des Brillenglases (12, 12', 12") bei einer bestimmungsgemäßen Anordnung und Ausrichtung vor dem Auge eines Betrachters ist.

3. Verfahren nach Anspruch 1, **dadurch gekennzeichnet, dass** die wenigstens eine optische Größe die optische Wirkung des Brillenglases (12, 12', 12") bei einer bestimmungsgemäßen Anordnung und Ausrichtung eines Brillenglaspaares vor den beiden Augen eines Betrachters ist.

4. Verfahren nach Anspruch 1, **dadurch gekennzeichnet, dass** die wenigstens eine optische Größe die optische Wirkung des Brillenglases in einem Scheitelbrechwertmesser ist.

**5.** Verfahren nach Anspruch 1, **dadurch gekennzeichnet, dass** die wenigstens eine optische Größe (sph, cyl, ax) die auf eine vorgegebene Lichteinfallsrichtung bezogene dioptrische Wirkung des Brillenglases (12, 12', 12") oder die Strahlablenkung ist.

**6.** Verfahren nach Anspruch 1, **dadurch gekennzeichnet, dass** die wenigstens eine optische Größe zumindest eine Größe aus der Gruppe sphärische Wirkung (sph) und/oder astigmatische Wirkung (cyl) und/oder Achslage (ax) ist.

**7.** Verfahren nach einem der Ansprüche 1 bis 6, **gekennzeichnet durch** das Ermitteln der Topografie der wenigstens einen optisch wirksamen Fläche (20) mit einem Verfahren aus der Gruppe
Abtasten der Fläche (20) mit einem Tastkopf einer Koordinatenmessmaschine;
Analysieren der Wellenfront von Licht, das die Fläche (20) durchsetzt oder an der Fläche (20) reflektiert wird; Vermessen der Fläche (20) mittels Deflektometrie, insbesondere mittels Reflexion von Mustern, z. B. Punktmustern und/oder Streifenmustern; Vermessen der Fläche (20) mittels Stitching-Interferometrie, Weißlicht-Interferometrie oder Ultraschall-Interferometrie.

**8.** Verfahren nach einem der Ansprüche 1 bis 7, **dadurch gekennzeichnet, dass** die wenigstens eine optische Größe (sph, cyl, ax) mittels Strahldurchrechnung berechnet wird.

**9.** Verfahren nach einem der Ansprüche 1 bis 8, **dadurch gekennzeichnet, dass** die Gewichtsverteilung $(G[f[X,Y]])$ für das Gewichten der lokalen Abweichung $(F[X,Y])$ eine Verteilungsfunktion für die Blickrichtungs-Häufigkeit beim bestimmungsgemäßen Brillenglas-Gebrauch und/oder eine Geometriefunktion für die geometrische Form des Brillenglases (12) in einem gerandeten Zustand ist und/oder eine von einem Sollwert $(S[X,Y])$ für eine lokale optische Größe abhängige Funktion und/oder eine von den berechneten lokalen Abweichungen $(F[X,Y])$ abhängige Funktion ist..

**10.** Verfahren nach einem der Ansprüche 1 bis 9, **dadurch gekennzeichnet, dass** die Gewichtsverteilung $(G[X,Y])$ eine mehrere Komponenten $Gs[X,Y]$, $Gc[X,Y]$ und $G_P[X,Y]$ aufweisende Funktion ist, deren Komponenten Gewichtsverteilungen für die Komponenten $Sph_F[X,Y])$, $Cyl_F[X,Y])$, $Pr_F[X,Y])$ einer lokalen optischen Größe $(F[X,Y])$ sind.

**11.** Verfahren nach einem der Ansprüche 1 bis 10, **dadurch gekennzeichnet, dass** das berechnete Qualitätsmaß (Q) in einer Qualitätsvorschrift mit einem Schwellwert (T) verglichen wird, um aus dem Vergleich mit dem Schwellwert (T) eine Pass-Fail-Entscheidung zutreffen.

**12.** Vorrichtung (10) für die Qualitätskontrolle eines Brillenglases (12),
mit einem
System für das Ermitteln der Topografie von wenigstens einer optisch wirksamen Fläche (20) des Brillenglases (12); und mit
einer Rechnereinheit (23) für das Berechnen von lokalen Istwerten $(I[X,Y])$ wenigstens einer optischen Größe des Brillenglases (12) unter Berücksichtigung der ermittelten Topografie, für das Berechnen von lokalen Abweichungen $(F[X,Y])$ der berechneten lokalen Istwerte $(I[X,Y])$ von lokalen Sollwerten $(S[X,Y])$ für die optische Größe des Brillenglases (12), für das Berechnen von einem Qualitätsmaß (Q) für das Brillenglas (12), und für das Bewerten von dem ermittelten Qualitätsmaß (Q) nach einer Qualitätsvorschrift
**dadurch gekennzeichnet, dass**
das Qualitätsmaß (Q) aus einem Mittelwert M der berechneten lokalen Abweichungen $(F[X,Y])$ an über das Brillengas verteilten Rasterpunkten $(P[X,Y])$ berechnet wird, wobei der Mittelwert M ein mit einer Gewichtsverteilung $(G[X,Y])$ gewichteter Mittelwert der berechneten lokalen Abweichungen $(F[X,Y])$ ist, wobei
die Gewichtsverteilung $(G[f[X,Y]])$ für das Gewichten der lokalen Abweichung $(F[X,Y])$ eine Funktion ist, die den Wert Null annimmt, wenn die berechnete lokale Abweichung $(F[X,Y])$ einen vorgegebenen Wert (W) unterschreitet.

**13.** System nach Anspruch 12, **dadurch gekennzeichnet, dass** das berechnete Qualitätsmaß (Q) in einer Qualitätsvorschrift mit einem Schwellwert (T) verglichen wird, um aus dem Vergleich mit dem Schwellwert (T) eine Pass-Fail-Entscheidung zutreffen.

**14.** Computerprogramm mit einem Programmcode, der dazu ausgebildet ist, ein Verfahren nach einem der Ansprüche 1 bis 11 auszuführen, wenn der Programmcode auf einem Computer ausgeführt wird.

**Claims**

1. Method for the quality control of a spectacle lens (12, 12', 12"), having the following steps:

   establishing the topography of at least one optically effective surface (20) of the spectacle lens (12);
   calculating local actual values (I[X,Y]) of at least one optical variable of the spectacle lens (12) taking into account the established topography;
   calculating local deviations (F[X,Y]) of the calculated local actual values (I[X,Y]) from local intended values (S[X,Y]) for the at least one optical variable of the spectacle lens;
   establishing a quality measure (Q) for the spectacle lens (12, 12', 12") by virtue of the calculated local deviations (F[X,Y]) being evaluated; and
   assessing the established quality measure (Q) according to a quality specification,
   **characterized in that**
   the quality measure (Q) is calculated from a mean value M of the calculated local deviations (F[X,Y]) at grid points (P[X,Y]) distributed over the spectacle lens, wherein the mean value M is a mean value of the calculated local deviations (F[X,Y]) weighted by a weight distribution (G[X,Y]), wherein
   the weight distribution (G[f[X,Y]])for weighting the local deviation (F[X,Y]) is a function which assumes the value of zero if the calculated local deviation (F[X,Y]) drops below a predetermined value (W) .

2. Method according to Claim 1, **characterized in that** the at least one optical variable (V) is the optical power of the spectacle lens (12, 12', 12") in the case of an intended arrangement and alignment in front of the eye of an observer.

3. Method according to Claim 1, **characterized in that** the at least one optical variable is the optical power of the spectacle lens (12, 12', 12") in the case of an intended arrangement and alignment of a spectacle lens pair in front of both eyes of an observer.

4. Method according to Claim 1, **characterized in that** the at least one optical variable is the optical power of the spectacle lens in a vertex refractometer.

5. Method according to Claim 1, **characterized in that** the at least one optical variable (sph, cyl, ax) is the dioptric power of the spectacle lens (12, 12', 12") in relation to a predetermined light incidence direction or the beam deflection.

6. Method according to Claim 1, **characterized in that** the at least one optical variable is at least one variable from the group made up of spherical power (sph) and/or astigmatic power (cyl) and/or axis (ax) .

7. Method according to any one of Claims 1 to 6, **characterized by** establishing the topography of the at least one optically effective surface (20) using a method from the group:

   sensing the surface (20) using a probe head of a coordinate measuring machine;
   analysing the wavefront of light which passes through the surface (20) or which is reflected by the surface (20);
   measuring the surface (20) by means of deflectometry, in particular by means of reflecting patterns, e.g. point patterns and/or strip patterns;
   measuring the surface (20) by means of stitching interferometry, white light interferometry or ultrasonic interferometry.

8. Method according to any one of Claims 1 to 7, **characterized in that** the at least one optical variable (sph, cyl, ax) is calculated by means of ray tracing.

9. Method according to any one of Claims 1 to 8, **characterized in that** the weight distribution (G[f[X,Y]]) for weighting the local deviation (F[X,Y]) is a distribution function for the viewing direction frequency when the spectacle lens is used as intended and/or a geometric function for the geometric form of the spectacle lens (12) in a rimmed state and/or a function dependent on an intended value (S[X,Y]) for a local optical variable and/or a function dependent on the calculated local deviations (F[X,Y]).

10. Method according to any one of Claims 1 to 9, **characterized in that** the weight distribution (G[X,Y]) is a function having a plurality of components $G_s[X,Y]$, $G_c[X,Y]$ and $G_P[X,Y]$, the components of which are weight distributions for the components $Sph_F[X,Y])$, $Cyl_F[X,Y])$, $Pr_F[X,Y])$ of a local optical variable (F[X,Y]).

**11.** Method according to any one of Claims 1 to 10, **characterized in that** the calculated quality measure (Q) is compared to a threshold (T) in a quality specification in order to make a pass/fail decision on the basis of the comparison with the threshold (T).

**12.** Device (10) for the quality control of a spectacle lens (12),
having a
system for establishing the topography of at least one optically effective surface (20) of the spectacle lens (12); and having
a computer unit (23) for calculating local actual values (I[X,Y]) of at least one optical variable of the spectacle lens (12) taking into account the established topography, for calculating local deviations (F[X,Y]) of the calculated local actual values (I[X,Y]) from local intended values (S[X,Y]) for the optical variable of the spectacle lens (12), for calculating a quality measure (Q) for the spectacle lens (12), and for evaluating the established quality measure (Q) according to a quality specification,
**characterized in that**
the quality measure (Q) is calculated from a mean value M of the calculated local deviations (F[X,Y]) at grid points (P[X,Y]) distributed over the spectacle lens, wherein the mean value M is a mean value of the calculated local deviations (F[X,Y]) weighted by a weight distribution (G[X,Y]), wherein the weight distribution (G[f[X,Y]])for weighting the local deviation (F[X,Y]) is a function which assumes the value of zero if the calculated local deviation (F[X,Y]) drops below a predetermined value (W).

**13.** Device according to Claim 12, **characterized in that** the calculated quality measure (Q) is compared to a threshold (T) in a quality specification in order to make a pass/fail decision on the basis of the comparison with the threshold (T).

**14.** Computer program comprising a program code embodied to execute a method according to any one of Claims 1 to 11 when the program code is executed on a computer.


**Revendications**

**1.** Procédé pour le contrôle qualité d'un verre de lunettes (12, 12', 12"), comprenant les étapes suivantes :

détermination de la topographie d'au moins une surface (20) optiquement active du verre de lunettes (12) ;
calcul de valeurs réelles locales (I[X,Y]) d'au moins une grandeur optique du verre de lunettes (12) en tenant compte de la topographie déterminée ;
calcul d'écarts locaux (F[X,Y]) entre les valeurs réelles locales (I[X,Y]) calculées et des valeurs de consigne locales (S[X,Y]) pour l'au moins une grandeur optique du verre de lunettes ;
détermination d'un indice de qualité (Q) pour le verre de lunettes (12, 12', 12") en interprétant les écarts locaux (F[X,Y]) calculés ; et
évaluation de l'indice de qualité (Q) déterminé conformément à une règle de qualité,
**caractérisé en ce que**
l'indice de qualité (Q) est calculé à partir d'une valeur moyenne M des écarts locaux (F[X,Y]) calculés au niveau de points de grille (P[X,Y]) distribués sur le verre de lunettes, la valeur moyenne M étant une valeur moyenne des écarts locaux (F[X,Y]) calculés pondérée avec une distribution du poids (G[X,Y]),
la distribution du poids (G[f[X,Y]]) étant une fonction pour la pondération de l'écart local (F[X,Y]) qui prend la valeur zéro lorsque l'écart local (F[X,Y]) calculé devient inférieur à une valeur prédéfinie (W).

**2.** Procédé selon la revendication 1, **caractérisé en ce que** l'au moins une grandeur optique (V) est l'effet optique du verre de lunettes (12, 12', 12") lors d'un arrangement et d'une orientation conformes à ce qui est prescrit devant l'œil d'un observateur.

**3.** Procédé selon la revendication 1, **caractérisé en ce que** l'au moins une grandeur optique est l'effet optique du verre de lunettes (12, 12', 12") lors d'un arrangement et d'une orientation conformes à ce qui est prescrit devant les deux yeux d'un observateur.

**4.** Procédé selon la revendication 1, **caractérisé en ce que** l'au moins une grandeur optique est l'effet optique du verre de lunettes dans un focomètre.

**5.** Procédé selon la revendication 1, **caractérisé en ce que** l'au moins une grandeur optique (sph, cyl, ax) est l'effet dioptrique du verre de lunettes (12, 12', 12") en référence à une direction d'incidence de la lumière prédéfinie ou la déviation du rayon.

6. Procédé selon la revendication 1, **caractérisé en ce que** l'au moins une grandeur optique est au moins une grandeur issue du groupe constitué de l'effet sphérique (sph) et/ou de l'effet d'astigmatisme (cyl) et/ou de la position d'axe (ax).

7. Procédé selon l'une des revendications 1 à 6, **caractérisé par** la détermination de la topographie de l'au moins une surface (20) optiquement active avec un procédé issu du groupe constitué par
le palpage de la surface (20) avec une tête de palpage d'une machine de mesure de coordonnées ;
l'analyse du front d'onde de la lumière qui remplit la surface (20) ou qui est réfléchie au niveau de la surface (20) ;
la mesure de la surface (20) au moyen de la déflectométrie, notamment au moyen de la réflexion de modèles, par exemple de modèles de points et/ou de modèles de lignes ; la mesure de la surface (20) au moyen de l'interférométrie par points, l'interférométrie à lumière blanche ou l'interférométrie par ultrasons.

8. Procédé selon l'une des revendications 1 à 7, **caractérisé en ce que** l'au moins une grandeur optique (sph, cyl, ax) est calculée au moyen d'un calcul global du rayon.

9. Procédé selon l'une des revendications 1 à 8, **caractérisé en ce que** la distribution du poids (G[f[X,Y]]) pour la pondération de l'écart local (F[X,Y]) est une fonction de distribution pour la fréquence de direction du regard lors d'une utilisation du verre de lunette conforme à ce qui est prescrit et/ou une fonction géométrique pour la forme géométrique du verre de lunette (12) dans un état encadré et/ou une fonction dépendant d'une valeur de consigne (S[X,Y]) pour une grandeur optique locale et/ou une fonction dépendant des écarts locaux (F[X,Y]) calculés.

10. Procédé selon l'une des revendications 1 à 9, **caractérisé en ce que** la distribution du poids (G[X,Y]) est une fonction qui possède plusieurs composants $G_s[X,Y]$, $G_C[X,Y]$ et $G_P[X,Y]$, dont les composants sont des distributions du poids pour les composants $Sph_F[X,Y]$, $Cyl_F[X,Y]$, $Pr_F[X,Y]$ d'une grandeur optique locale (F[X,Y]).

11. Procédé selon l'une des revendications 1 à 10, **caractérisé en ce que** l'indice de qualité (Q) calculé est comparé dans une règle de qualité avec une valeur de seuil (T) afin de prendre une décision de conformité/non-conformité à partir de la comparaison avec la valeur de seuil (T).

12. Dispositif (10) pour le contrôle qualité d'un verre de lunettes (12),
comprenant un
système pour la détermination de la topographie d'au moins une surface (20) optiquement active du verre de lunettes (12) ; et comprenant
une unité de calcul (23) pour le calcul de valeurs réelles locales (I[X,Y]) d'au moins une grandeur optique du verre de lunettes (12) en tenant compte de la topographie déterminée, pour le calcul d'écarts locaux (F[X,Y]) entre les valeurs réelles locales (I[X,Y]) calculées et des valeurs de consigne locales (S[X,Y]) pour la grandeur optique du verre de lunettes (12), pour le calcul d'un indice de qualité (Q) pour le verre de lunettes (12) et pour l'évaluation de l'indice de qualité (Q) déterminé conformément à une règle de qualité,
**caractérisé en ce que**
l'indice de qualité (Q) est calculé à partir d'une valeur moyenne M des écarts locaux (F[X,Y]) calculés au niveau de points de grille (P[X,Y]) distribués sur le verre de lunettes, la valeur moyenne M étant une valeur moyenne des écarts locaux (F[X,Y]) calculés pondérée avec une distribution du poids (G[X,Y]),
la distribution du poids (G[f[X,Y]]) étant une fonction pour la pondération de l'écart local (F[X,Y]) qui prend la valeur zéro lorsque l'écart local (F[X,Y]) calculé devient inférieur à une valeur prédéfinie (W).

13. Système selon la revendication 12, **caractérisé en ce que** l'indice de qualité (Q) calculé est comparé dans une règle de qualité avec une valeur de seuil (T) afin de prendre une décision de conformité/non-conformité à partir de la comparaison avec la valeur de seuil (T).

14. Programme informatique comprenant un code de programme qui est configuré pour mettre en œuvre un procédé selon l'une des revendications 1 à 11 lorsque le code de programme est exécuté sur un ordinateur.

Fig.1

$L=\{X_L,Y_L,Z_L\}$

24 — 22

14

17

$k=\{0,0,Z_k\}$

15

30 — $p'=\{X_{p'},Y_{p'},Z_{p'}\}$

17

17

30 — $p=\{X_p,Y_p,Z_p\}$

30

$B=\{X_B,Y_B,\emptyset\}$

## Fig.2

15

17

17

12

20

## Fig.3

Fig.4

Fig.5

Fig.6

Fig.7

Fig.8

Fig.9

**IN DER BESCHREIBUNG AUFGEFÜHRTE DOKUMENTE**

**In der Beschreibung aufgeführte Patentdokumente**

- DE 102007061375B3

- EP 2189776 A1

**In der Beschreibung aufgeführte Nicht-Patentliteratur**

- **BERND DÖRBAND.** Handbook of Optical Systems. Wiley-VCH, 2012